# FASCICULE DE BREVET EUROPEEN

(11) **EP 3 162 155 B1**
(45) Date de publication et mention de la délivrance du brevet: **01.08.2018**
(21) Numéro de dépôt: 15742340.1
(22) Date de dépôt: 24.06.2015
(51) Int. Cl.: H04W 74/08

(54) **PROCÉDÉ DE RÉGULATION D'ÉMISSION DESTINÉ À ÊTRE MIS EN OEUVRE PAR UNE STATION DANS UN RÉSEAU DE TÉLÉCOMMUNICATIONS**
ÜBERTRAGUNGSSTEUERUNGSVERFAHREN ZUR IMPLEMENTIERUNG DURCH EINE STATION IN EINEM TELEKOMMUNIKATIONSNETZ
TRANSMISSION CONTROL METHOD INTENDED FOR BEING IMPLEMENTED BY A STATION IN A TELECOMMUNICATIONS NETWORK

(30) Priorité: 30.06.2014 FR 1456217
(43) Date de publication de la demande: 03.05.2017
(73) Titulaire: Orange, 75015 Paris (FR)
(72) Inventeur: BROWN, Patrick, F-06800 Cagnes sur Mer (FR); GALTIER, Jérôme, 75017 Paris (FR)
(74) Mandataire: Delumeau, François Guy
(86) Numéro de dépôt international: PCT/FR2015/051704
(87) Numéro de publication internationale: WO 2016/001531

(56) Documents cités:
- WO-A1-2012/001285
- WO-A1-2013/049826
- WO-A2-2012/059674
- US-A1- 2013 070 627
- ZHIPENG ZHAO ET AL: "Enhanced QoS 802.11n prototype including a Tournament Contention Function", 2012 IEEE WIRELESS COMMUNICATIONS AND NETWORKING CONFERENCE (WCNC), 1 avril 2012 (2012-04-01), pages 1502-1507, XP055181947, DOI: 10.1109/WCNC.2012.6214019 ISBN: 978-1-46-730435-1

## Description

### Arrière-plan de l'invention

L'invention se rapporte au domaine des réseaux de télécommunication sans fil, en particulier des réseaux locaux sans fil conformes à la famille de normes IEEE 802.11.

De tels réseaux sont également nommés réseaux Wi-Fi. Ils sont utilisés pour mettre en réseau, dans de nombreuses applications, des stations, par exemple des ordinateurs, des assistants personnels et des périphériques.

La norme 802.11 définit dans le document « IEEE 802.11a-1999, IEEE 802.11b-1999, IEEE 802.11d-2001, Part 11 : wireless medium access control (MAC) and physical layer (PHY) spécifications », un procédé de régulation du trafic dans le réseau sans fil. Ce procédé utilise un système de fenêtres de congestion (Congestion Window « CW ») pour réguler ce trafic. Selon cette norme, et d'une façon générale, une station tire un nombre aléatoire cw entre 0 et CW-1, la valeur CW étant un entier compris entre deux valeurs CWmin et CWmax définies par la norme 802.11, par exemple 16 et 1024. Cette valeur cw sert de compte à rebours (en anglais « backoff timer ») pour l'émission du paquet, ce compteur étant différé si la station constate qu'une autre station est en train d'émettre.

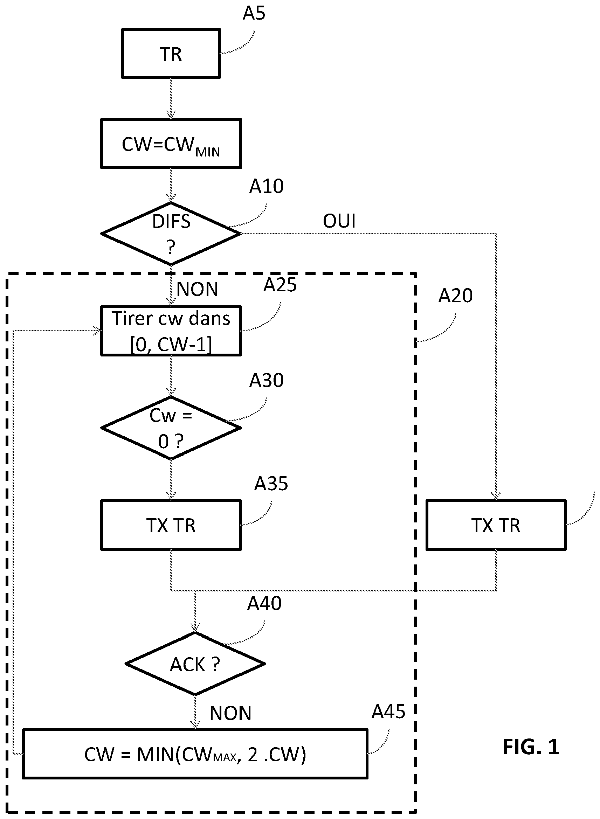

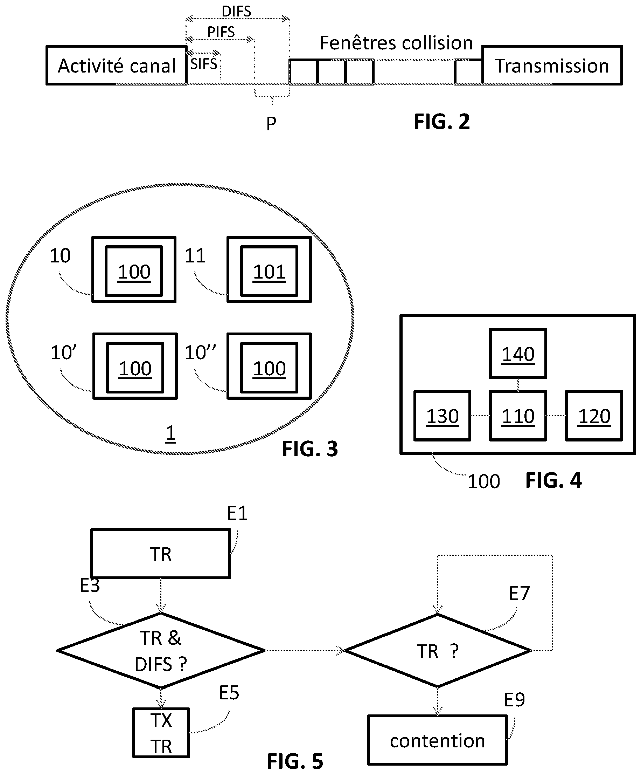

Les principales étapes de ce procédé conventionnel vont maintenant être décrites en référence aux figures 1 et 2.

Lorsqu'une trame TR se présente pour être émise (étape A5), la station détermine (étape A10) si le médium est libre depuis une durée au moins égale à DIFS.

Si tel est le cas, la trame est émise (étape A15).

Sinon, en particulier si la station était elle-même en train d'émettre une trame, la station démarre (étape A20) une période de contention après une durée DIFS de silence après la dernière émission.

La période de contention consiste à attendre (étape A30) le compte à rebours cw précité (« backoff timer ») tiré au hasard entre 0 et CW-1 (étape A25), avant d'émettre la trame TR (étape A35). A chaque tentative d'émission qui n'est pas couronnée de succès, c'est-à-dire lorsque la trame émise n'est pas acquittée (test A40), une nouvelle fenêtre de congestion CW' est calculée à partir de la valeur CW courante (étape A35) selon la formule CW'=Min (CWmax, 2.CW) et un nouveau compte à rebours est tiré au hasard entre 0 et la nouvelle valeur CW'-1 (étape A40).

Conformément à la figure 2, la contention est suspendue pendant une période totale incluant d'une part une période d'activité du médium avec transmission d'une trame et d'autre part une période DIFS (DCF Interframe Space) suffisamment longue pour laisser le temps à la station réceptrice d'acquitter la trame reçue après SIFS (Short Interframe Space) et pour laisser un point d'accès émettre un message de gestion après PIFS (PCF Interframe Space). Les stations mettant en oeuvre ce mécanisme n'émettent pas dans la plage [PIFS, DIFS] référencée P sur cette figure.

Malheureusement, ce mécanisme conventionnel à fenêtres de congestion génère un nombre important de collisions, ce qui se traduit pour l'utilisateur par une perte importante de bande passante ;
Plusieurs procédés de résolution de contention ont été proposés dans l'état de la technique.

Un mécanisme connu sous le nom « méthode des tournois » et décrit dans le document « Achibar et M.Chang CONTI Constant Time Contention Resolution for WLAN Access » IFIP Networking 2005, ci-après [CONTI] propose un procédé de résolution de contention en temps constant qui utilise une série de tests successifs pour sélectionner la station qui va émettre, réguler les émissions de trames et limiter le taux de collision.

D'une façon générale, la méthode des tournois consiste à organiser une sorte de tournoi entre stations ayant au moins une trame à émettre. Un tournoi est composé d'un certain nombre de tours de sélection exécuté chacun pendant un intervalle de temps de durée prédéfinie. Au début du tournoi, toutes les stations ayant à émettre une trame sont susceptibles d'être autorisées à émettre cette trame. A chaque tour de sélection, une ou plusieurs stations sont susceptibles d'être supprimées de la liste des stations autorisées à émettre selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant une collision et donc une réception perturbée avec impossibilité de recevoir correctement la trame de données émise. Ces stations devront alors participer au tournoi suivant pour tenter à nouveau d'émettre ces trames.

Plus précisément, selon le procédé CONTI, l'élimination des stations désirant émettre est accomplie grâce à l'utilisation d'une variable booléenne appelée « try-bit ». Plus précisément, chaque station choisit cette variable aléatoirement et émet un signal sur le réseau si cette valeur est égale à 1 ou écoute le réseau dans le cas contraire. Une station se retire du réseau, c'est-à-dire décide de ne pas émettre son paquet de données au cours d'une série de tours de sélection, si la valeur binaire est 0 et qu'elle détecte un signal émis par une autre station.

Bien que plus performante que la méthode de congestion définie par la norme 802.11, la méthode de résolution de contention proposée par CONTI génère encore un nombre de collisions important dans l'accès au réseau sans fil. Cet inconvénient est dû que la loi de probabilités utilisée pour le tirage de la variable aléatoire « try-bit » n'est pas optimisée.

Le document FR2893206 de la Demanderesse décrit un autre mécanisme à tournoi qui permet de réduire considérablement le nombre de collisions expérimentées par CONTI, en améliorant la loi de probabilités utilisée pour le tirage de la valoir aléatoire binaire try-bit.

D'une façon générale, le problème de la coexistence entre les stations conformes au protocole 802.11, ci-après « stations conventionnelles » avec les stations mettant en oeuvre un mécanisme à tournoi pose un problème en termes d'équité d'accès aux ressources.

L'invention vise un procédé de régulation d'émission permettant de faire cohabiter des stations mettant en oeuvre un mécanisme à tournoi avec des stations conventionnelles conformes au protocole 802.11.

### Objet et résumé de l'invention

Ainsi, et selon un premier aspect, l'invention concerne un procédé de régulation d'émission destiné à être mis en oeuvre par une station ayant au moins une trame à émettre via un réseau de télécommunications, cette station appartenant à un premier groupe de stations partageant un même mécanisme de résolution de contention, ce procédé comportant une étape de participation à un tournoi servant à départager, au sein du premier groupe les stations ayant le droit d'émettre et les stations ayant interdiction d'émettre à l'issue du tournoi.

Conformément à l'invention, ce procédé comporte, lorsque la station est autorisée à émettre, une étape d'émission de la trame, dans une période de temps au cours de laquelle des stations d'un deuxième groupe mettant en oeuvre un autre mécanisme de résolution de contention ne sont pas autorisées à émettre dans le réseau.

Corrélativement, l'invention concerne un dispositif de régulation destiné à être incorporé dans une station ayant au moins une trame à émettre via un réseau de télécommunications, cette station appartenant à un premier groupe de stations partageant un même mécanisme de résolution de contention. Ce dispositif comporte des moyens pour participer à un tournoi servant à départager, au sein du premier groupe les stations ayant le droit d'émettre et les stations ayant interdiction d'émettre à l'issue du tournoi et des moyens, lorsque la station est autorisée à émettre, pour émettre ladite trame, dans une période de temps au cours de laquelle des stations d'un deuxième groupe mettant en oeuvre un autre mécanisme de résolution de contention ne sont pas autorisées à émettre dans le réseau.

Ainsi, et d'une façon générale, l'invention propose de protéger les trames émises par les stations du premier groupe contre des collisions avec des trames émises par les stations du deuxième groupe, en émettant ces trames dans des périodes de temps pendant lesquelles les stations du deuxième groupe ne sont pas autorisées à émettre.

L'invention améliore ainsi la coexistence entre des stations accédant à un même médium et mettant en oeuvre des mécanismes de résolution de contention différents.

Dans un mode de réalisation particulier, la période de temps pendant laquelle les stations du premier groupe ayant gagné un tournoi émettent est la période comprise entre les durées PIFS et DIFS définies par la norme IEEE 802.11 et comptées après la fin de l'émission d'une trame. Ce mode de réalisation permet avantageusement de faire coexister des stations utilisant un mécanisme à tournoi avec des stations utilisant un mécanisme conventionnel à fenêtres de congestion conforme au standard IEEE802.11, les stations ayant gagné un tournoi émettant des trames dans la plage [PIFS, DIFS] référencée P sur la figure 2, plage dans laquelle il a été rappelé que les stations conventionnelles n'émettaient pas.

Dans un mode particulier de réalisation, une station du premier groupe ayant gagné le tournoi attend, avant d'émettre une trame, un nombre total de slots libres équivalent au nombre de slots libres, noté Ts ci-après, qu'attendrait une station du deuxième groupe avant d'émettre une trame dans ledit réseau.

Ce mode particulier de réalisation de l'invention permet un accès au canal compatible avec la norme IEEE 802.11 et équitable entre les stations du premier groupe et celles du deuxième groupe.

Dans un mode particulier de réalisation, pour estimer ce nombre de slots libres à attendre, la station du premier groupe simule le comportement d'au moins une station du deuxième groupe ayant une trame à émettre. On obtient ainsi un nombre de slots variable et adapté aux conditions réelles de l'environnement réseau.

De façon facultative, dans un mode particulier de réalisation, une station du premier groupe qui a (i) gagné le tournoi et (ii) attendu Ts comme mentionné ci-dessus, émet sa trame après détection d'un nombre prédéterminé de slots vides consécutifs, noté Ta.

Ce mécanisme constitue un premier garde-fou permettant en particulier aux stations du premier groupe d'émettre indépendamment du mécanisme de résolution de contention du deuxième groupe après un certain délai. En particulier, lorsque les stations du deuxième groupe utilisent un mécanisme conventionnel à fenêtres de congestion conforme au standard IEEE802.11, ce mécanisme permet aux stations du premier groupe ayant gagné le tournoi d'émettre sans attendre une trame derrière laquelle se protéger.

Dans un mode particulier de réalisation, le procédé selon l'invention comporte une étape d'émission de la trame si aucun tournoi n'a été démarré pendant au moins une durée prédéterminée, notée T1 ci-après.

Ce mécanisme constitue un deuxième garde-fou permettant d'émettre une trame si aucun tournoi ne démarre.

Dans un mode particulier de réalisation, les différentes étapes du procédé de régulation d'émission sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de régulation d'émission tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 déjà décrites illustrent un procédé de régulation d'émission conforme au standard 802.11;
- la figure 3 représente réseau de télécommunication sans fil;
- la figure 4 représente un dispositif de régulation d'émission conforme à un mode particulier de réalisation de l'invention ;
- les figures 5 et 6 représentent sous forme d'organigramme un procédé de régulation d'émission conforme à un mode particulier de réalisation de l'invention ;
- les figures 7, 8 et 9 représentent sous forme d'organigramme trois variantes de procédures de contention pouvant être utilisées dans des modes particuliers de réalisation de l'invention ; et
- les figures 10 à 12 présentent des résultats de simulation qui permettent d'illustrer des avantages conférés par l'invention.

### Description détaillée de l'invention

La figure 3 représente un réseau de télécommunication sans fil dans lequel évoluent des stations 10, 10', 10" conformes à l'invention et des stations conventionnelles 11 conformes à la norme 802.11.

Chacune des stations 10 comporte un dispositif de régulation d'émission 100 conforme à l'invention. Dans le mode représenté à la figure 4, le dispositif de régulation 100 comporte un processeur 110, une mémoire vive 120, une mémoire morte de type ROM 130 et un module d'accès 140 au réseau. Ces différents éléments sont reliés entre eux par un système de bus non référencé.

Le module 140 est apte à émettre et à recevoir des trames et des signaux dans le réseau 1.

Dans l'exemple décrit ici, le module 140 est constitué par une carte d'accès au réseau conforme à la norme IEEE 802.11.

Chaque station 10, 10', 10" met en oeuvre un procédé de régulation d'émission de trame dans le réseau 1 basé sur un mécanisme à tournoi. Ce procédé de régulation peut être mis en oeuvre par l'exécution d'un programme d'ordinateur stocké dans la mémoire morte 130.

De manière similaire, chaque station 11 comprend un dispositif de régulation d'émission 101 qui met en oeuvre un procédé à fenêtre de congestion conforme au protocole IEEE 802.11 tel que décrit en référence aux figures 1 et 2.

Dans la méthode des tournois décrite dans CONTI, les autorisations ou interdictions d'émettre sont attribuées aux stations en utilisant des variables aléatoires binaires ayant une loi de distribution de Bernouilli. Cette loi de distribution est définie par une probabilité de tirage d'une autorisation d'émettre. Une telle probabilité est ainsi affectée à chaque station et à chaque tour de sélection. Les probabilités sont choisies de préférence de manière à ce que statistiquement le taux de collision soit le plus faible possible.

Une procédure pour choisir les probabilités de façon optimale est présentée dans le document « Analysis et optimization of mac with constant size congestion windows for WLAN" par J. Galtier, Proceedings on the Third International Conférence on Services and Networks communications, INRIA, Library of Congress Number 2007930108, August 2007.

Selon un mode de réalisation particulier décrit dans !e document de brevet FR2893206, les probabilités affectées aux différentes stations lors d'un tour de sélection peuvent être fonction des autorisations ou interdictions d'émettre tirées aux tours de sélection précédents de manière à minimiser le taux de collision.

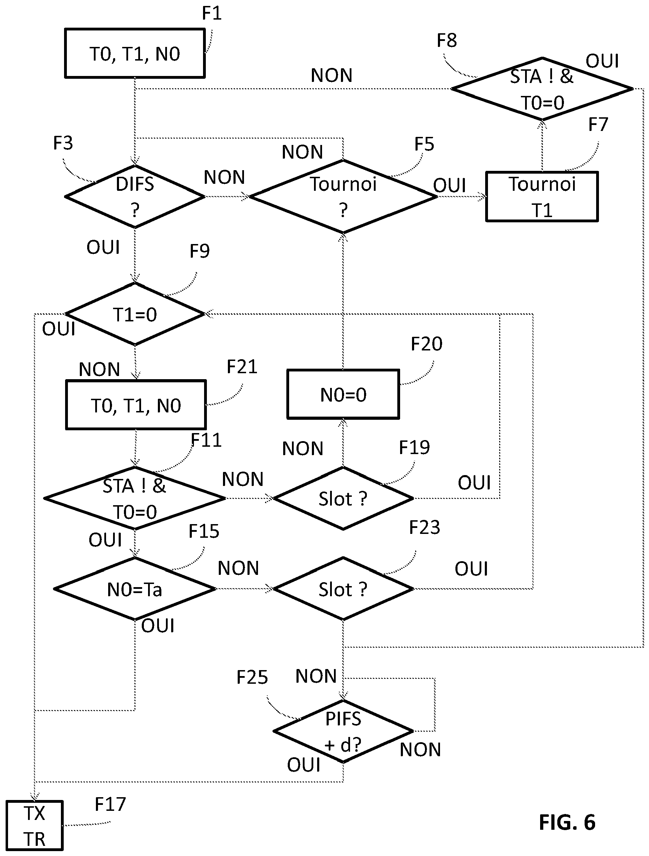

Les figures 5 et 6 représentent sous forme d'organigramme les principales étapes d'un procédé de régulation d'émission selon un premier mode de réalisation de l'invention.

Ce procédé est mis en oeuvre par le dispositif de régulation d'émission 100 d'une station 10, 10', 10" ayant au moins une trame de données à émettre à travers le réseau 1. Toutes les stations 10, 10', 10" ayant une trame de données à émettre, mettent en oeuvre simultanément ce même procédé, sans qu'une concertation soit nécessaire entre ces stations.

Comme il sera détaillé ci-dessous, conformément à l'invention, une station 10, 10', 10" ayant gagné le tournoi cherche à émettre sa trame TR de façon protégée par rapport aux stations conventionnelles 11, c'est à dire dans une fenêtre de temps pendant laquelle ces stations conventionnelles n'émettent pas.

Plus précisément, dans le mode de réalisation décrit ici, une station 10, 10', 10" conforme à l'invention émet alors sa trame TR après une période PIFS+d (boucle F25), comptée après la libération du médium suite à l'émission d'une trame par une station conventionnelle 11. Une collision n'est alors susceptible de se produire que si deux stations conformes à l'invention ont gagné le tournoi, ce qui est statistiquement peu probable.

Dans le mode de réalisation décrit ici, le procédé selon l'invention vise à ne pas privilégier les stations 10, 10', 10, conformes à l'invention par rapport aux stations conventionnelles. Par conséquent, une station qui a gagné le tournoi attend (test F11 = VRAI ou test F8=VRAI), avant d'émettre sa trame TR, un nombre total de slots libres équivalent au nombre correspondant de slots Ts qu'attendrait une station conventionnelle avant d'émettre une trame. On utilise à cet effet un compteur T0 initialisé à Ts et décrémenté à chaque fois qu'un slot libre est détecté (étape F21).

Dans un mode particulier de réalisation, afin d'estimer cette valeur Ts, chaque station selon l'invention 10, 10', 10" simule, lorsqu'elle a une trame à émettre le comportement d'une ou plusieurs stations conventionnelles 11 qui aurait une telle trame à émettre en déroulant le procédé à fenêtre de congestion décrit précédemment en référence à la figure 1, à l'exception des étapes A15 et A35 d'émission effective de la trame. La station 10, 10', 10" peut ainsi estimer le nombre se slots que chacune de ces stations conventionnelles fictives aurait du attendre pour émettre cette trame et calculer la valeur Ts à partir de ces estimations, par exemple en effectuant une moyenne glissante ou une moyenne harmonique.

Dans le mode de réalisation décrit ici, si le médium n'est pas occupé par une trame émise par une station conventionnelle, la station 10, 10', 10" ayant gagné le tournoi, émet sa trame TR après un nombre prédéterminé Ta de slots vides consécutifs. A cet effet, on utilise une variable N0 incrémentée d'une unité lorsqu'un slot libre est détecté (étape F21) et réinitialisée à 0 lorsqu'un slot occupé est détecté (étape F20).

Dans le mode de réalisation décrit, une station STA selon l'invention peut émette sa trame TR sans autre condition si aucun tournoi n'a été démarré depuis une durée T1 (test F9) pour éviter une situation de blocage.

Dans le mode de réalisation décrit ici, une station 10, 10', 10" qui vient de gagner un nouveau tournoi et qui avait déjà une trame à émettre depuis une durée supérieure à la durée Ts qu'aurait attendu une station conventionnelle 11, est autorisée à émettre cette trame de façon protégée, après une durée PIFS+d comptée après la libération du médium.

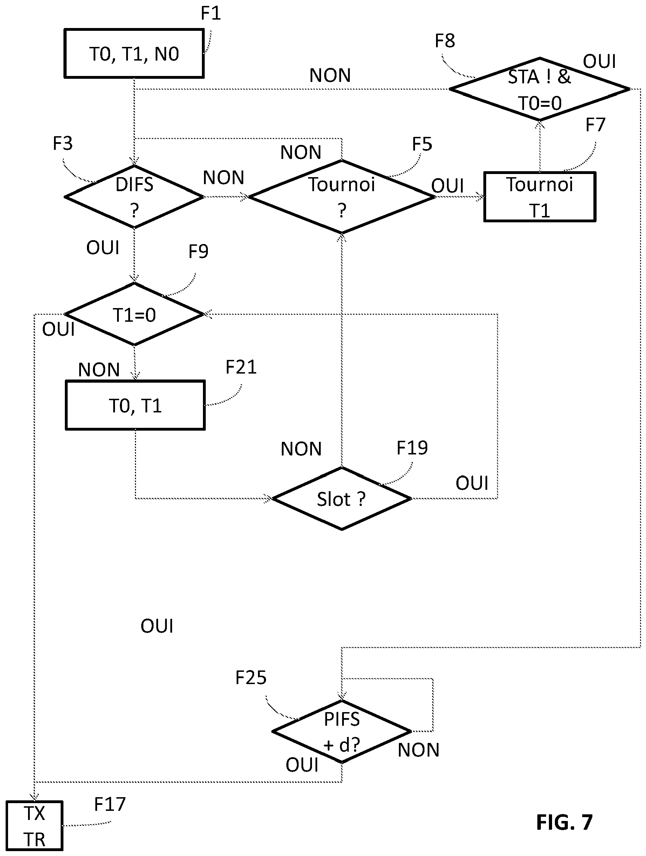

Une première variante de la procédure de contention décrite précédemment en référence à la figure 6 va maintenant être décrite en référence à la figure 7.

On suppose qu'une station conforme à l'invention 10, 10', 10" a une nouvelle trame à émettre à l'étape E1.

Comme pour le cas d'une station conventionnelle 11, la station 10, 10', 10" conforme à l'invention détermine (étape E3) si la nouvelle trame est la prochaine à émettre (autrement dit si elle se trouve en tête d'une file de trames à émettre) et si le médium est libre depuis une durée au moins égale à DIFS.

Si tel est le cas, la trame est émise (étape E5). Sinon, la station attend que la trame soit en tête de file (étape E7), et démarre à l'étape E9 une procédure de contention détaillée à la figure 6.

On rappelle qu'en parallèle la station 10, 10', 10" conforme à l'invention a déterminé, en simulant le comportement d'au moins une station conventionnelle 11, le nombre de slots Ts qu'une station conventionnelle 11 attendrait dans l'état actuel du réseau pour émettre une trame avec succès. Lors de la première itération du procédé, la valeur Ts peut par exemple être fixée à 8.

Au cours d'une étape F1, la station 10, 10', 10" initialise :
- la variable N0 destinée à compter le nombre de slots vides consécutifs à 0 ;
- la variable T0 destinée à favoriser un comportement équitable avec les stations conventionnelles 11 à max(Ts-8,0)+rand(0, 15) où rand (i, j) renvoie une valeur aléatoire avec une valeur uniformément répartie entre i et j inclus ;
- la variable T1 destinée à permettre l'envoi d'une trame si aucun tournoi n'est démarré pendant cette période à la valeur T0+16.

Au cours d'une étape F3, la station 10, 10', 10" vérifie si le médium est libre depuis une durée DIFS.

Si ce n'est pas le cas, le résultat du test F3 est négatif. Cela signifie qu'un paquet est en train d'être émis par une autre station conventionnelle ou conforme à l'invention.

Au cours d'une étape F5, la station 10, 10', 10" vérifie si un tournoi est démarré. Dans le mode de réalisation décrit ici, lorsque c'est le cas, le paquet émis sur le médium comporte un signal spécial à cet effet.

Au cours d'une étape F7, la station 10, 10', 10" joue le tournoi et met à jour la valeur T1 en l'augmentant de 16 unités (T1=T1+16).

Dans le mode de réalisation décrit ici, la station 10, 10', 10" détermine, au cours d'une étape F8, si elle vient de gagner ce nouveau tournoi et si elle a une trame à émettre depuis une durée supérieure à la durée Ts qu'aurait attendu une station conventionnelle 11, autrement dit si T0=0. Si c'est le cas, la station attend que le médium soit libéré depuis une durée PIFS+d (boucle F25) puis elle émet sa trame (étape F17). Cette émission ne peut entrer en collision avec une trame émise par une station conventionnelle 11. Si le résultat du test F8 est négatif on retourne au test F3 déjà décrit.

S'il est déterminé à l'étape F3 que le médium est libre depuis au moins DIFS (résultat du test positif), la station 10, 10', 10" vérifie au cours d'un test F9 si le compteur T1 a expiré. Cela signifie qu'aucun tournoi n'a été démarré depuis T1, et la station 10 émet sa trame (étape F17).

Si le compteur T1 n'a pas expiré (résultat du test F9 négatif), les variables sont mises à jour au cours d'une étape F21. Cette mise à jour consiste à décrémenter T0 et T1 et à incrémenter N0. Plus précisément, dans le mode de réalisation décrit ici :
T0=max(T0-1, 0), T1=max(T1-1, 0), et N0=min(N0+1, Ta).

Puis, la station 10, 10', 10" détermine, au cours d'un test F11, si elle a gagné le tournoi et si elle a une trame à émettre depuis une durée supérieure à la durée Ts qu'aurait attendu une station conventionnelle 11, autrement dit si T0=0. Si ce n'est pas le cas, le résultat du test F11 est négatif. La station 10, 10', 10" vérifie au cours d'un test F19 si le slot est libre. Si le médium est occupé, la variable N0 qui mémorise le nombre de slots libres consécutifs est réinitialisée à 0 (étape F20) et on retourne à l'étape F5 pour vérifier si la trame émise sur le médium annonce le démarrage d'un tournoi. Si le médium est libre (résultat du test F19 positif), les variables sont mises à jour au cours de l'étape F21 déjà décrite, sauf si T1 a expiré, auquel cas la trame est émise (étape F17).

Si la station 10, 10', 10" détermine, au cours d'un test F11 qu'elle a gagné le tournoi et qu'elle a une trame à émettre depuis une durée supérieure à la durée Ts qu'aurait attendu une station conventionnelle 11, autrement dit si T0=0, le résultat du test F11 est positif. La station 10, 10', 10" vérifie au cours d'un test F15 si au moins Ta slots libres consécutifs ont été observés, autrement dit si N0=Ta.

Si tel est le cas, la station 10, 10', 10" émet sa trame (étape F17).

Sinon, le résultat du test F15 est négatif et la station 10, 10', 10" vérifie si le médium est occupé (test F23). Si le slot est libre, les variables T0, T1, N0 sont mises à jour au cours de l'étape F21 déjà décrite, sauf si T1 a expiré, auquel cas la trame est émise (étape F17).

Si le slot est occupé (résultat du test F23 négatif), la station 10, 10', 10" attend que le médium soit libéré depuis une durée PIFS+d (boucle F25) puis elle émet sa trame (étape F17). Cette émission ne peut entrer en collision avec une trame émise par une station conventionnelle 11.

En référence à la figure 7, nous allons décrire une autre procédure de contentieux conforme à l'invention.

Ce mode de réalisation est similaire à celui décrit à la figure 6 en considérant la valeur Ta infinie, ce qui revient du point de vue de l'implémentation à ne plus utiliser la variable N0.

Le test F15 de la figure 6 dont le résultat serait toujours négatif est donc supprimé.

Dans ce mode de réalisation, s'il est déterminé à l'étape F3 que le médium est libre depuis au moins DIFS (résultat du test positif), la station 10, 10', 10" vérifie au cours d'un test F9 si le compteur T1 a expiré. Cela signifie qu'aucun tournoi n'a été démarré depuis T1, et la station 10 émet sa trame (étape F17).

Si le compteur T1 n'a pas expiré (résultat du test F9 négatif), les variables T0 et T1 sont mises à jour au cours d'une étape F21.

Puis, la station 10, 10', 10" détermine directement, au cours du test F19 si le médium est occupé. Si le médium est occupé, la station vérifie si un nouveau tournoi est annoncé (étape F5) comme dans l'exemple de la figure 6.. Si le médium est libre (résultat du test F19 positif), les variables sont mises à jour au cours de l'étape F21 déjà décrite, sauf si T1 a expiré, auquel cas la trame est émise (étape F17).

Ce mode de réalisation est donc simplifié par rapport à celui de la figure 6.

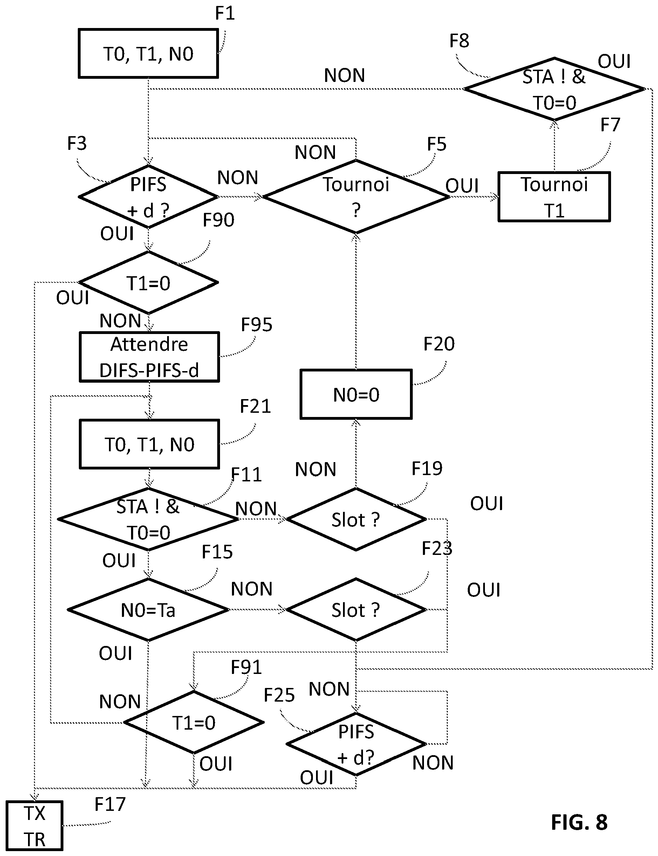

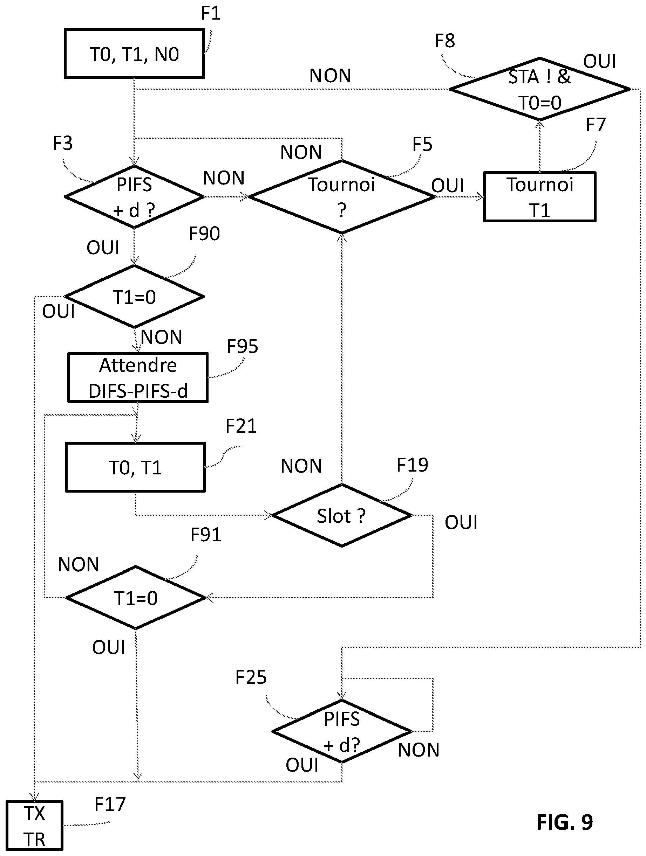

Les figures 8 et 9 représentent deux autres variantes de procédures de contention pouvant être utilisées dans l'invention.

D'une façon générale, ces variantes diffèrent des procédures de contention décrites aux figures 6 et 7, on ce qu'on attend au test F3 la durée PIFS + d au lieu de la durée DIFS afin d'émettre en mode prioritaire et d'éviter les collisions avec les stations conventionnelles.

Dans ce mode de réalisation, il est nécessaire de se recaler temporellement pour attendre en tout la durée DIFS si la station n'émet pas (résultat du test F1 négatif). Par conséquent, dans l'implémentation proposée ici, le test F9 des figures 6 et 7 sont remplacés par des tests F90, F91 comme représenté aux figures 8 et 9.

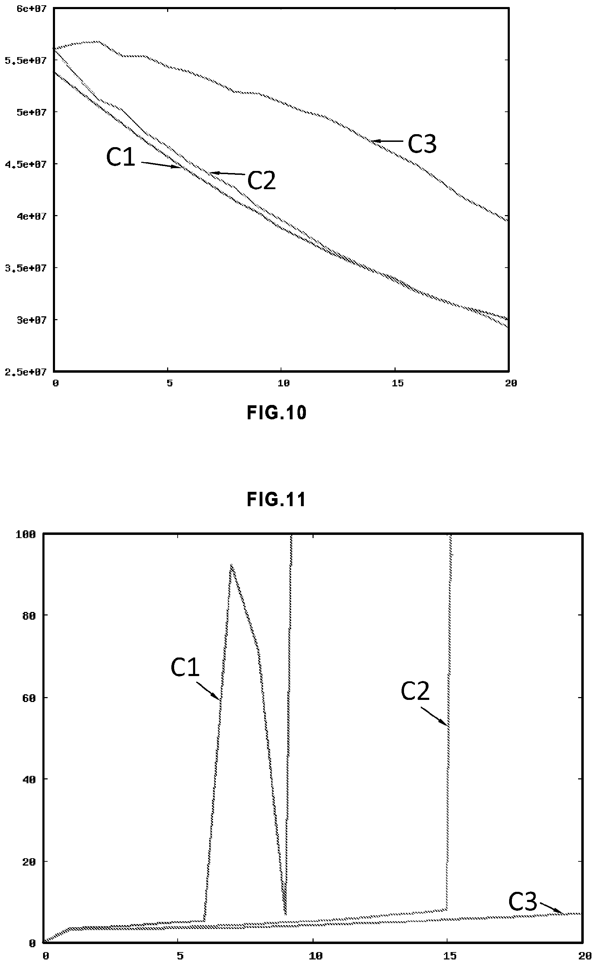

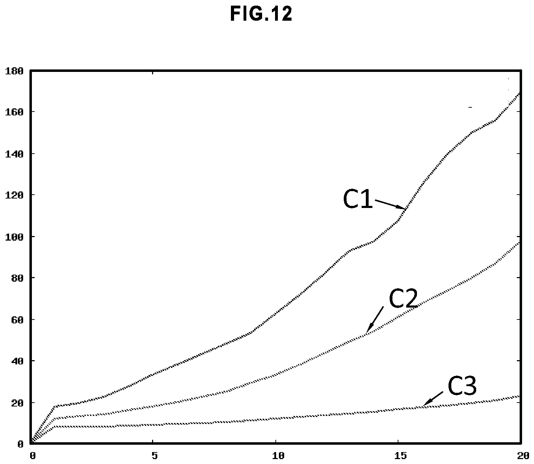

Les figures 10 à 12 présentent des résultats de simulation qui permettent d'illustrer des avantages conférés par l'invention.

On considère dans ces figures, deux stations qui demandent en permanence de la bande passante, comme c'est le cas pour le téléchargement d'un fichier volumineux, par exemple.

Puis, on considère, en plus de ces deux stations, un nombre variable de canaux voix, porté sur l'axe des abscisses de ses figures.

Sur chacune de ces figures :
- la courbe C1 correspond à des mesures pour des scénarios dans lesquels 100% des stations sont conventionnelles ;
- la courbe C2 correspond à des mesures de stations conventionnelles pour des scénarios dans lesquels 50% des stations sont conventionnelles, 50% mettant en oeuvre un procédé de régulation conforme à l'invention ; et
- la courbe C3 correspond à des mesures de stations mettant en oeuvre un procédé de régulation conforme à l'invention pour des scénarios dans lesquels 50% des stations sont conventionnelles, 50% mettant en oeuvre un procédé de régulation conforme à l'invention.

Sur l'axe des ordonnées de la figure 9, on a représenté le débit en bits par seconde obtenu par chacune des stations en téléchargement dans ces deux scénarios. Il ressort de cette figure que les stations conventionnelles qui cohabitent avec des stations conformes à l'invention (courbe C2) ont autant voire plus de bande passante que les stations qui ne cohabitent qu'avec des stations conventionnelles (courbe C1).

En ordonnées des figures 10 et 11 on a représenté, pour les stations de type voix, le délai en millisecondes obtenu pour les paquets de type voix et la variation de délais de ces mêmes paquets (en retenant 99% des meilleurs paquets, les 1% les moins performants étant ignorés).

On constate que les stations conformes à l'invention diminue le nombre de collisions et améliore le fonctionnement global du système.

On note par ailleurs sur la figure 10, qu'au-delà de 6 communications voix simultanées, le Wifi traditionnel perd tellement de paquets que le délai global grimpe en flèche (C2), alors qu'en présence de l'invention, ce phénomène intervient au-delà de 14 stations (courbe C2).

L'invention s'applique à tous les réseaux radio de mode distribué. Elle peut s'appliquer à tout système de type CSMA-CA, et aux systèmes de courant porteur en ligne (CPL).

Dans le cadre d'une utilisation domestique ou d'entreprise, l'invention rend possible l'introduction de nouveaux mécanismes d'accès au médium radio nécessaires pour des applications, telles que les communications de voix full duplex transitant par une passerelle qui sert de PABX d'entreprise.

L'invention permet aussi de faire cohabiter des flux tendus vidéos, des flux de surveillance, ... sur un seul canal Wi-Fi, même lorsque ce canal est contraint à une bande passante limitée (20MHz).

## Revendications

1. Procédé de régulation d'émission destiné à être mis en oeuvre par une station (10) ayant au moins une trame à émettre via un réseau de télécommunications, ladite station (10) appartenant à un premier groupe de stations partageant un premier mécanisme de résolution de contention, ce procédé comportant une étape (F7) de participation à un tournoi servant à départager, au sein dudit premier groupe, les stations ayant le droit d'émettre et les stations ayant interdiction d'émettre à l'issue dudit tournoi, ledit procédé comportant, lorsque ladite station (10) est autorisée à émettre, une étape (F25) d'émission de ladite trame, dans une période de temps au cours de laquelle des stations d'un deuxième groupe mettant en oeuvre un deuxième mécanisme de résolution de contention ne sont pas autorisées à émettre dans ledit réseau, les premier et deuxième mécanismes de résolution de contention étant différents, ledit procédé étant **caractérisé en ce que** ladite station (10) attend (F11, F8), avant d'émettre ladite trame (F25), un nombre total de slots libres équivalent au nombre de slots libres (Ts) qu'attendrait une station du deuxième groupe avant d'émettre une trame dans ledit réseau, et **en ce qu'**il comporte une étape d'émission de ladite trame après détection d'un nombre prédéterminé (Ta) de slots vides consécutifs.

2. Procédé de régulation d'émission selon la revendication 1, **caractérisé en ce que**, ladite période de temps est la période comprise entre les durées PIFS et DIFS définies par la norme IEEE 802.11 et comptées après la fin de l'émission d'une trame.

3. Procédé de régulation d'émission selon la revendication 1, **caractérisé en ce que**, pour estimer ledit nombre de slots libres à attendre, ladite station simule le comportement d'au moins une station du deuxième groupe ayant une trame à émettre.

4. Procédé de régulation d'émission selon la revendication 1 **caractérisé en ce qu'**il comporte une étape d'émission de ladite trame si aucun tournoi n'a été démarré pendant au moins une durée prédéterminée (T1).

5. Dispositif de régulation destiné à être incorporé dans une station (10) ayant au moins une trame à émettre via un réseau de télécommunications, ladite station (10) appartenant à un premier groupe de stations partageant un premier mécanisme de résolution de contention, ledit dispositif comportant des moyens (130) pour participer à un tournoi servant à départager, au sein dudit premier groupe, les stations ayant le droit d'émettre et les stations ayant interdiction d'émettre à l'issue dudit tournoi, ledit dispositif comportant des moyens (140), lorsque la station (10) est autorisée à émettre, pour émettre ladite trame, dans une période de temps au cours de laquelle des stations d'un deuxième groupe mettant en oeuvre un deuxième mécanisme de résolution de contention ne sont pas autorisées à émettre dans ledit réseau, les premier et deuxième mécanismes de résolution de contention étant différents, ledit dispositif étant configuré pour attendre, avant d'émettre ladite trame (F25), un nombre total de slots libres équivalent au nombre de slots libres (Ts) qu'attendrait une station du deuxième groupe avant d'émettre une trame dans ledit réseau, et pour émettre ladite trame après détection d'un nombre prédéterminé (Ta) de slots vides consécutifs.

6. Programme informatique comportant des instructions logicielles pour la mise en oeuvre d'un procédé de régulation d'émission selon l'une quelconque des revendications 1 à 4, lorsque ledit programme est exécuté par un processeur de données.

7. Support d'enregistrement lisible par un processeur de données sur lequel est enregistré un programme comportant des instructions de code de programme pour l'exécution des étapes d'un procédé de régulation d'émission selon l'une quelconque des revendications 1 à 4.

## Patentansprüche

1. Verfahren zur Übertragungssteuerung, welches dazu bestimmt ist, von einer Station (10) durchgeführt zu werden, die wenigstens einen Rahmen über ein Telekommunikationsnetz zu senden hat, wobei diese Station (10) einer ersten Gruppe von Stationen angehört, die einen ersten Konfliktauflösungsmechanismus gemeinsam nutzen, wobei dieses Verfahren einen Schritt (F7) der Teilnahme an einem Turnier umfasst, das dazu dient, innerhalb der ersten Gruppe die Stationen, die das Recht haben zu senden, und die Stationen, die Sendeverbot haben, am Ende des Turniers zu trennen, wobei das Verfahren, wenn die Station (10) berechtigt ist zu senden, einen Schritt (F25) des Sendens des Rahmens in einer Zeitspanne umfasst, während welcher Stationen einer zweiten Gruppe, die einen zweiten Konfliktauflösungsmechanismus anwenden, nicht berechtigt sind, in dem Netz zu senden, wobei der erste und der zweite Konfliktauflösungsmechanismus verschieden sind, wobei das Verfahren **dadurch gekennzeichnet ist, dass** die Station (10), bevor sie den Rahmen sendet (F25), eine Gesamtanzahl von freien Zeitschlitzen abwartet (F11, F8), die zu der Anzahl freier Zeitschlitze (Ts) äquivalent ist, welche eine Station der zweiten Gruppe abwarten würde, bevor sie einen Rahmen in dem Netz sendet, und dass es einen Schritt des Sendens des Rahmens nach Erkennung einer vorbestimmten Anzahl (Ta) von aufeinander folgenden leeren Zeitschlitzen umfasst.

2. Verfahren zur Übertragungssteuerung nach Anspruch 1, **dadurch gekennzeichnet, dass** die Zeitspanne die Spanne ist, die zwischen den Dauern PIFS und DIFS liegt, die durch die Norm IEEE 802.11 definiert sind und vom Ende des Sendens eines Rahmens an gemessen werden.

3. Verfahren zur Übertragungssteuerung nach Anspruch 1, **dadurch gekennzeichnet, dass**, um die abzuwartende Anzahl freier Zeitschlitze zu schätzen, die Station das Verhalten wenigstens einer Station der zweiten Gruppe simuliert, die einen Rahmen zu senden hat.

4. Verfahren zur Übertragungssteuerung nach Anspruch 1, **dadurch gekennzeichnet, dass** es einen Schritt des Sendens des Rahmens umfasst, falls während wenigstens einer vorbestimmten Dauer (T1) kein Turnier gestartet worden ist.

5. Vorrichtung zur Steuerung, welche dazu bestimmt ist, in eine Station (10) integriert zu werden, die wenigstens einen Rahmen über ein Telekommunikationsnetz zu senden hat, wobei diese Station (10) einer ersten Gruppe von Stationen angehört, die einen ersten Konfliktauflösungsmechanismus gemeinsam nutzen, wobei die Vorrichtung Mittel (130) aufweist, um an einem Turnier teilzunehmen, das dazu dient, innerhalb der ersten Gruppe die Stationen, die das Recht haben zu senden, und die Stationen, die Sendeverbot haben, am Ende des Turniers zu trennen, wobei die Vorrichtung Mittel (140) aufweist, um, wenn die Station (10) berechtigt ist zu senden, den Rahmen in einer Zeitspanne zu senden, während welcher Stationen einer zweiten Gruppe, die einen zweiten Konfliktauflösungsmechanismus anwenden, nicht berechtigt sind, in dem Netz zu senden, wobei der erste und der zweite Konfliktauflösungsmechanismus verschieden sind, wobei die Vorrichtung dafür ausgelegt ist, bevor sie den Rahmen sendet (F25), eine Gesamtanzahl von freien Zeitschlitzen abzuwarten, die zu der Anzahl freier Zeitschlitze (Ts) äquivalent ist, welche eine Station der zweiten Gruppe abwarten würde, bevor sie einen Rahmen in dem Netz sendet, und den Rahmen nach Erkennung einer vorbestimmten Anzahl (Ta) von aufeinander folgenden leeren Zeitschlitzen zu senden.

6. Computerprogramm, welches Softwareanweisungen für die Ausführung eines Verfahrens zur Übertragungssteuerung nach einem der Ansprüche 1 bis 4, wenn das Programm von einem Datenprozessor ausgeführt wird, umfasst.

7. Von einem Datenprozessor lesbares Aufzeichnungsmedium, auf welchem ein Programm aufgezeichnet ist, das Programmcodeanweisungen zur Ausführung der Schritte eines Verfahrens zur Übertragungssteuerung nach einem der Ansprüche 1 bis 4 umfasst.

## Claims

1. Transmission control method intended to be implemented by a station (10) having at least one frame to transmit via a telecommunications network, said station (10) belonging to a first group of stations sharing a first contention resolution mechanism, this method including a step (F7) of participating in a tournament used to distinguish, within said first group, the stations having the right to transmit and the stations barred from transmitting at the end of said tournament, said method including, when said station (10) is authorized to transmit, a step (F25) of transmitting said frame, within a period of time during which stations of a second group implementing a second contention resolution mechanism are not authorized to transmit in said network, the first and second contention resolution mechanisms being different, said method being **characterized in that** said station (10) waits (F11, F8), before transmitting said frame (F25), a total number of free slots equivalent to the number of free slots (Ts) that a station of the second group would wait before transmitting a frame in said network, and **in that** it includes a step of transmitting said frame after detection of a predetermined number (Ta) of consecutive empty slots.

2. Transmission control method according to Claim 1, **characterized in that** said period of time is the period between the PIFS and DIFS durations defined by the IEEE 802.11 standard and counted after the end of the transmission of a frame.

3. Transmission control method according to Claim 1, **characterized in that**, to estimate said number of free slots to be waited, said station simulates the behaviour of at least one station of the second group having a frame to transmit.

4. Transmission control method according to Claim 1, **characterized in that** it includes a step of transmitting said frame if no tournament has been started for at least a predetermined duration (T1).

5. Control device intended to be incorporated into a station (10) having at least one frame to transmit via a telecommunications network, said station (10) belonging to a first group of stations sharing a first contention resolution mechanism, said device including means (130) for participating in a tournament used to distinguish, within said first group, the stations having the right to transmit and the stations barred from transmitting at the end of said tournament, said device including means (140), when the station (10) is authorized to transmit, for transmitting said frame, within a period of time during which stations of a second group implementing a second contention resolution mechanism are not authorized to transmit in said network, the first and second contention resolution mechanisms being different, said device being configured to wait, before transmitting said frame (F25), a total number of free slots equivalent to the number of free slots (Ts) that a station of the second group would wait before transmitting a frame in said network, and to transmit said frame after detection of a predetermined number (Ta) of consecutive empty slots.

6. Computer program including software instructions for implementing a transmission control method according to any one of Claims 1 to 4 when said program is executed by a data processor.

7. Recording medium able to be read by a data processor and on which is recorded a program including program code instructions for executing the steps of a transmission control method according to any one of Claims 1 to 4.
